# EUROPEAN PATENT APPLICATION

(11) **EP 4 292 809 A1**
(43) Date of publication of application: **20.12.2023**
(21) Application number: 22179618.8
(22) Date of filing: 17.06.2022
(51) Int. Cl.: B32B 13/04, E04C 1/41, E04B 1/78, E04C 2/04

(54) **PANELS COMPRISING HARDENED INORGANIC FOAM AND STRUCTURAL REINFORCING ELEMENT, METHODS FOR THEIR MANUFACTURE AND USE THEREOF**

(71) Applicant: Sika Technology AG, 6340 Baar (CH)
(72) Inventor: FLÜCK, Armin, 6064 Kerns (CH); ROTZETTER, Aline, 5430 Wettingen (CH); BUCHER, Reto, 6064 Kerns (CH); BARMET, Robin, 6060 Sarnen (CH); ACKERMANN, Herbert, 8632 Tann (CH)
(74) Representative: Sika Patent Attorneys

(57) **Abstract**

The present invention relates to construction panels (1) comprising an insulation layer (2) formed by a hardened inorganic foam and at least one structural reinforcing element (3) which is firmly attached to at least one surface of said hardened inorganic foam wherein said at least one structural reinforcing element (3) is a hardened mortar, preferably a hardened cementitious mortar. Panels of the present invention are useful as thermal and/or acoustic insulation panels or as cover boards in construction.

## Description

### Technical Field

The present invention relates to construction panels comprising an insulation layer formed by a hardened inorganic foam and at least one structural reinforcing element which is firmly attached to at least one surface of said hardened inorganic foam. Panels of the present invention are useful as thermal and/or acoustic insulation panels or as cover boards in construction and/or for fire protection.

### Background of the invention

Building facades must be protected from environmental loads such as wind and rain. Buildings must also be thermally insulated to prevent unnecessary flow of heat energy from inside to outside of the building or vice versa. Additionally, acoustic insulation and/or for fire protection of buildings or between compartments within buildings is becoming increasingly important. Especially for the thermal insulation of buildings, it is known to carry out either thermal insulation from the outside (EIFS) which consists in placing thermal insulation panels and different layers of facing materials, such as for example mineral or organic plasters, on the exterior walls of a building, or thermal insulation from the inside (ITI) which consists in particular of placing thermal insulation panels and different layers of facing materials on the interior walls of a building.

Rigid prefabricated insulation panels comprising foamed synthetic organic materials, such as expanded polystyrene (EPS) foam panels, extruded expanded polystyrene (XPS) foam panels, polyurethane foam panels (PUR), and polyisocyanurate (PIR) are typically used for thermal insulation of building structures. Such materials have a very low thermal conductivity, relatively high compressive strength, and low density, typically not more than 150 g/l, which makes them very suitable for thermal insulation applications. The major disadvantage of foamed synthetic organic materials is their high flammability. Typically, additional fire proofing structures, such as fire-resistant glass scrims or glass mats must be applied. In some countries, an inflammable "fire bar" having a melting point of at least 1000 °C must be added between adjacent insulation panels in facades to fulfill the fireproof requirements.

Acoustic insulation panels are available for example made from mineral wool. Fireproof panels are available for example made from mineral wool based sandwich panels, or made from plasterboard, or made from cementitious mortars.

Foamed cementitious compositions are known and typically provide a combination of reduced weight and good thermal and/or acoustic insulation properties combined with excellent fire resistance. Foamed concrete, also known as cellular light weight concrete (CLC), can be obtained by mixing a gas producing blowing agent, such as hydrogen peroxide or aluminum powder, into a concrete slurry or by separately producing an aqueous foam which is then mixed with a concrete slurry.

Foamed cementitious compositions have good fire resistance properties, but they also have relatively low compressive and/or bending strength due to the brittleness of the foamed material. Poor strength can lead to problems during transportation, storage, handling, and installation. In order to compensate the disadvantage of poor mechanical properties, foamed cementitious boards can be used in combination with foamed synthetic organic boards, typically EPS boards, to provide "lightweight insulated concrete (LWIC) systems.

WO 2021/023942 discloses a thermal insulation panel comprising a thermal insulation layer formed by a cured inorganic foam and at least one open-worked and flexible reinforcing element. However, such composite materials are difficult to recycle.

EP 1088800 discloses an acoustic insulation panel having a layer of foamed cementitious material and a backing layer affixed thereto which backing layer may be made of paper, felt, fiberglass matts, or mineral fiberboard.

WO 2015/144796 discloses cement-based coating compositions suitable for passive fire protection.

The insulation panel should be lightweight, have excellent fire resistance properties, and sufficient mechanical strength, particularly in terms of compressive and bending strength. The technical problem underlying the invention therefore consists in providing a thermal and/or acoustic insulation and/or fire protection panel which is recyclable, which has high fire resistance, and which can be easily installed. Preferably, the insulation panel has a low environmental impact.

### Summary of the invention

It is an objective of the present invention to provide panels which at the same time have insulation properties, especially thermal and/or acoustic insulation and/or fire protection properties, have sufficient mechanical strength, and have good fire-resistant properties. Preferably, the panels of the present invention are also lightweight, i.e. have a low density.

It has surprisingly been found that panels as claimed in claim 1 are a solution to this objective.

The heart of the invention lies in the discovery that a sufficiently high mechanical strength of a panel comprising a hardened inorganic foam as insulation layer can be achieved by firmly attaching at least one structural reinforcing element wherein said at least one structural reinforcing element is a hardened mortar, to a surface of said inorganic foam. Insulation properties, especially thermal and/or acoustic insulation properties, and fire resistance are not compromised. Especially suitable materials for the structural reinforcing elements are hardened mortars, preferably hardened cementitious mortars, in particular hardened mortars of the same chemical composition as the hardened inorganic foam but having a higher density.

Further aspects of the present invention are the subject of further independent claims. Preferred embodiments of the present invention are the subject of dependent claims.

### Ways of carrying out the invention

In a first aspect the present invention relates to a panel comprising an insulation layer formed by a hardened inorganic foam and at least one structural reinforcing element which is firmly attached to at least one surface of said hardened inorganic foam, wherein said at least one structural reinforcing element is a hardened mortar, preferably a hardened cementitious mortar.

A panel within the present context may have any form or shape. According to preferred embodiments, a panel is in the form of a rectangular cuboid, especially in the form of a rectangular plate. However, other shapes and forms, especially irregular shapes, are also possible. It is particularly preferred that panels of the present invention are shaped in a regular way so that they can cover a given surface in full with thin joints and without any overlaps. The dimensions of a panel of the present invention are not particularly limited. However, dimensions suitable for the panel to be installed on buildings are generally preferred.

The panel can be a pre-fabricated panel. The panel can also be made at a job site, for example, it can be a formed-in-place panel or a cast-in-place panel.

A panel of the present invention comprises an insulation layer. The insulation layer is a layer with insulating properties, especially with properties of thermal and/or acoustic insulation and/or fire protection. In other words, the insulation layer preferably is a thermal and/or acoustic insulation and/or fire protection layer, especially a thermal insulation layer. According to embodiments, the insulation layer has a thermal conductivity of between 0.02 and 0.15 W/m•K, preferably 0.03 and 0.07 W/m•K. The thermal conductivity is measured according to standard DIN EN 12664:2001.

The insulation layer is formed by a hardened inorganic foam. In other words, the insulation layer consists of a hardened inorganic foam. The term "hardened inorganic foam" within the present context relates to a material based on a cured inorganic binder and having an air pore structure. Preferably, the air pore structure is a closed cell structure. It is, however, also possible that it is an open cell structure.

According to embodiments, the density of the insulation layer is not more than 500 g/l, preferably not more than 350 g/l, more preferably not more than 250 g/l, even more preferably not more than 200 g/l, preferably in the range of 25 - 250 g/l, more preferably in the range of 35 - 150 g/l.

Throughout the present context, when density is mentioned or density values are given, such densities are measured gravimetrically. A preferred measurement method is as follows: a sample cube having dimensions of 10×10×10 cm is first cut from the material and then dried in an oven at a temperature of 70 °C until the weight of the material remains constant. The weight of the sample cube is then measured, and the density of the material in g/l is obtained by dividing the measured weight of the cube in g by 1 I.

Within the present context, the term "low density" stands for a density of not more than 500 g/l.

The mechanical strength of a panel and/or of materials described in the present invention may be measured as an impact resistance of the cured material. Impact resistance can be measured in accordance to standards EN ISO 7892 and/or EOTA EAD 040083-00-0404 (2019). Another way to measure the mechanical strength is to measure the compressive strength, for example according to standard DIN EN 826:2013. Impact resistance and compressive strength correlate with each other. This means that a higher impact resistance is always correlated with a higher compressive strength and vice versa.

According to embodiments, the hardened inorganic foam of the present invention comprises
a) at least one cured inorganic binder **B,**
b) at least one surfactant **S** and/or particles **N,** and
c) optionally at least one synthetic organic polymer **SP.**

Preferably, the at least one inorganic binder **B** is selected from the group consisting of cement, gypsum, lime, latent hydraulic binders, pozzolanes, and geopolymers. Cements can in particular be Portland cements as described in standard EN 197-1:2018-11, calcium aluminate cements as described in standard EN 14647, and/or calcium sulfoaluminate cements. The term "gypsum" is meant to encompass CaSO₄ in various forms, in particular CaSO₄ anhydrite, CaSO₄ α- and β- hemihydrate, and CaSO₄ dihydrate. The term "lime" is meant to encompass natural hydraulic lime, formulated lime, hydraulic lime, and air lime as described in the standard EN 459-1:2015. Pozzolanes and latent hydraulic materials preferably are selected from the group consisting of clay, calcined clay, especially metakaolin, kiln dust, microsilica, fly ash, zeolite, rice husk ash, slag, especially blast furnace slag, burnt oil shale, and natural pozzolane such as pumice and trass. Geopolymers are alumo-siliceous polymers. One particular example of a geopolymer is furnace slag activated with water glass.

It is preferred that the at least one inorganic binder **B** is selected from Portland cement, calcium aluminate cement, calcium sulfoaluminate cement, latent hydraulic binder materials, pozzolanic binder materials, calcium sulfate, and/or hydrated lime. Especially, the at least one inorganic binder **B** is selected from Portland cement, calcium aluminate cement, and/or calcium sulfoaluminate cement.

The term "Portland cement" as used herein particularly refers to cements described in European Standard EN-197. Portland cement consists mainly of tri-calcium silicate (alite) (C₃S) and dicalcium silicate (belite) (C₂S). Preferred Portland cements include the types CEM I, CEM II, CEM III, CEM IV, and CEM V of the European standard EN 197-1:2018-11. However, all other Portland cements that are produced according to another standard, for example, according to ASTM standard, British (BSI) standard, Indian standard, or Chinese standard are also suitable.

The term "aluminate cement" as used herein is intended to include those cementitious materials that contain as the main constituent (phase) hydraulic calcium aluminates, preferably mono calcium aluminate CA (CaO · Al₂O₃). Depending on the type of the aluminate cement, other calcium aluminates, such as CA₂, C₃A, and C₁₂A₇, may also be present. Preferred aluminate cements include also other constituents, such as belite (C₂S), alite (C₃S), ferrites (C₂F, C₂AF, C₄AF), and ternesite (C₅S₂$). Some aluminate cements also contain calcium carbonate.

Most preferred aluminate cements for use as the at least one inorganic binder **B** include calcium aluminate cements (CAC), which fulfill the requirements of the standard EN 4647 ("Calcium Aluminate Cement"). Suitable calcium aluminate cements are commercially available, for example, from Imerys Aluminates and Royal White Cement.

The term "calcium sulfoaluminate cement (CSA)" is intended to include those cementitious materials that contain as the main constituent (phase) C₄(A₃₋ₓFₓ)3$ (4CaO · 3-x Al₂O₃ · x Fe₂O₃ · CaSO₄), wherein x has a value of 0,1, 2, or 3. Typically, calcium sulfoaluminate cements also include other constituents, such as aluminates (CA, C₃A, C₁₂A₇), belite (C₂S), ferrites (C₂F, C₂AF, C₄AF), ternesite (C₅S₂$), and calcium sulfate. Preferred calcium sulfoaluminate cements for use as the at least one inroganic binder **B** contain 20 - 80 w% of ye'elimite (C₄A₃$), 0 - 10 w% of calcium aluminate (CA), 0- 70 w% of belite (C₂S), 0 - 35 w% of ferrite, preferably tetracalcium aluminoferrite (C₄AF), and 0 - 20 w% of ternesite (C₅S₂$), based on the total weight of the calcium sulfoaluminate cement. Suitable calcium sulfoaluminate cements (CSA) are commercially available, for example, from Heidelberg Cement AG, Vicat SA, and Caltra B.V.

A cured inorganic binder **B** is an inorganic binder **B** that has reacted, preferably has essentially completely reacted, in a curing reaction in the presence of water. Especially, the curing reaction comprises the formation of solid hydrates or solid hydrate phases. The term "essentially completely reacted" refers to an essentially complete reaction at 25 °C, 1023 mbar, and 50% r.h.

According to one or more embodiments, the weight ratio of the amount of the at least one inorganic binder **B** to the amount of the at least one synthetic organic polymer **SP** in the hardened inorganic foam is from 100:0 to 70:30, preferably from 100:0 to 80:20.

According to one or more embodiments, at least one synthetic organic polymer is present and the proportion of the at least one synthetic organic polymer **SP** is 1 - 25 w%, preferably 5 - 15 w%, more preferably 8 - 12 w%, with respect to the weight of the at least one inorganic binder **B** in the hardened inorganic foam.

The at least one synthetic organic polymer **SP** may be used to improve mechanical properties, particularly the compressive strength and/or flexural strength, of the hardened inorganic foam.

The type of the synthetic organic polymer **SP** is not particularly restricted. Suitable synthetic organic polymers include, for example, polyurethane polymers and homopolymers and copolymers obtained from free radical polymerization of one or more monomers selected from the group consisting of ethylene, propylene butylene, isoprene, butadiene, styrene, acrylonitrile, (meth)acrylic acid, (meth)acrylate, vinyl ester, vinyl neodecanoate, vinyl alcohol, and vinyl chloride. The term "(meth)acrylate" refers to acrylate and methacrylate and term "(meth)acrylic" refers to acrylic and methacrylic.

The term "polyurethane polymer" refers polymers prepared by so called diisocyanate polyaddition process, including those polymers which are almost or completely free of urethane groups. Examples of suitable polyurethane polymers include polyether polyurethanes, polyester polyurethanes, polyether polyureas, polyureas, polyester polyureas, polyisocyanurates, and polycarbodiimides.

According to one or more embodiments, the at least one synthetic organic polymer **SP** is a polyurethane polymer, preferably based on at least one polyisocyanate and at least one polyol and/or polyamine monomer.

Suitable polyisocyanates include monomeric polyisocyanates, as well as oligomers, polymers, and derivatives of monomeric polyisocyanates, and mixtures thereof.

Suitable monomeric polyisocyanates for polyurethane polymers include at least aromatic di- and tri-functional isocyanates, such as 2,4- and 2,6-toluylendiisocyanate and mixtures of its isomers (TDI), 4,4'-, 2,4'- and 2,2'-diphenylmethandiisocyanate and mixture of its isomers (MDI), 1,3- and 1,4-phenylendiisocyanate, 2,3,5,6-tetramethyle-1,4-diisocyanatobenzol, naphthaline-1,5-diisocyanate (NDI), 3,3'-dimethyl-4,4'-diisocyanatodiphenyl (TODI), dianisidindiisocyanate (DADI), 1,3,5-tris-(isocyanatomethyl)benzene, tris-(4-isocyanatophenyl)methane and tris-(4-isocyanatophenyl) thiophosphate.

Further suitable monomeric polyisocyanates for polyurethane polymers include aliphatic di- and tri-functional isocyanates, such as 1,4-tetramethylendiisocyanat, 2-methylpentamethylene-1,5-diisocyanate, 1,6-hexamethylendiisocyanate (HDI), 2,2,4-and 2,4,4-trimethyl-1,6-hexa-methylendiisocyanate (TMDI), 1,10-decamethylendiisocyanate, 1,12-dodecame-thylendiisocyanat, lysin- and lysinesterdiisocyanate, cyclohexane-1,3- and -1,4-diisocyanate, 1-methyl-2,4- and-2,6-diisocyanatocyclohexane and mixtures of its isomers (HTDI or H6TDI), 1-isocyanato-3,3,5-trimethyl-5-iso-cyanatomethyl-cyclohexane (=isophorondiisocyanate or IPDI), perhydro-2,4'- and -4,4'-diphenylmethandiisocyanate (HMDI or H12MDI), 1,4-diisocyanato-2,2,6-trimethylcyclohexane (TMCDI), 1,3-and 1,4-Bis-(isocyanatomethyl)cyclo-hexane, m- and p-xylylendiisocyanate (m- and p-XDI), mand p-tetramethyle-1,3- and -1,4-xylylendiisocyanate (m- and p-TMXDI), bis-(1-isocyanato-1-methyl-ethyl)naphthaline, dimer- and trimer fatty acid isocyanate such as 3,6-bis-(9-isocya-natononyl)-4,5-di-(1-heptenyl)cyclohexen (dimeryldiisocyanat) and α, α, α', α', α", α"-hexamethyl-1,3,5-mesitylentriisocyanate.

Particularly suitable polyols for polyurethane polymers include polyether polyols, polyester polyols, polycarbonate polyols, poly(meth)acrylate polyols, and hydrocarbon polyols, such as polybutadiene polyols, polyhydroxy functional fats and oils, and polyhydroxy functional acrylonitrile-butadiene copolymers.

Particularly suitable polyether polyols include polyoxyalkylene diols and/ or polyoxyalkylene triols, especially the polymerization products of ethylene oxide or 1,2-propylene oxide or 1,2- or 2,3-butylene oxide or oxetane or tetrahydrofuran or mixtures thereof, which can be polymerized with using a starter molecule having two or three active hydrogen, in particular one, such as water, ammonia or a compound with several OH or NH groups, such as 1,2-ethanediol, 1,2- or 1,3-propanediol, neopentyl glycol, diethylene glycol, triethylene glycol, the isomeric dipropylene glycols or tripropylene glycols, the isomeric butanediols, pentanediols, hexanediols, heptanediols, octanediols, nonanediols, decanediols, undecanediols, 1,3- or 1,4-cyclohexanedimethanol, bisphenol A, hydrogenated bisphenol A, 1,1,1-trimethylolethane, 1,1,1- trimethylolpropane, glycerol or aniline, or mixtures of the aforementioned compounds.

Suitable polyester polyols include liquid polyester polyols as well as amorphous, partially crystalline, and crystalline polyester polyols, which are solid at a temperature of 25 °C. These can be obtained from by reacting dihydric and trihydric, preferably dihydric, alcohols, for example, 1,2-ethanediol, diethylene glycol, triethylene glycol, 1,2-propanediol, 1,3-propanediol, dipropylene glycol, 1,4-butanediol, 1,5-pentanediol, 1,6-hexanediol, 1,8-octanediol, 1,10-decanediol, 1,12-dodecanediol, dimer fatty alcohol, neopentyl glycol, glycerol, 1,1,1-trimethylolpropane or mixtures of the aforesaid alcohols, with organic dicarboxylic acids or tricarboxylic acids, preferably dicarboxylic acids, or their anhydrides or esters, such as succinic acid, glutaric acid, 3,3-dimethylglutaric acid, adipic acid, suberic acid, sebacic acid, undecanedioic acid, dodecanedicarboxylic acid, azelaic acid, maleic acid, fumaric acid, phthalic acid, dimer fatty acid, isophthalic acid, terephthalic acid, and hexahydrophthalic acid, or mixtures of the aforesaid acids, and also polyester polyols made from lactones such as from ε-caprolactone, for example, also known as polycaprolactones.

Suitable polyamine monomers are compounds having two or more isocyanate reactive amine groups. Examples of employable polyamine monomers include diethyltolylenediamine, methylbis(methylthio)phenylenediamine, adipic dihydrazide, ethylenediamine, diethylenetriamine, triethylenetetramine, tetraethylenepentamine, pentaethylenehexamine, dipropylenetriamine, hexamethylenediamine, hydrazine, isophoronediamine, N-(2-aminoethyl)-2-aminoethanol, polyoxyalkyleneamine, adducts of salts of 2-acrylamido2-methylpropane-1-sulfonic acid (AMPS) and ethylenediamine, adducts of salts of (meth)acrylic acid and ethylendiamine, adducts of 1,3-propanesulfone and ethylenediamine or any desired combination of these polyamines.

According to one or more preferred embodiments, the at least one synthetic organic polymer **SP** is selected from the group consisting of polyacrylates, styrene-acrylate copolymers, polyvinyl esters, ethylene-vinyl acetate copolymers, ethylene-vinyl alcohol copolymers, styrene-butadiene copolymers, vinyl acetate-vinyl neodecanoate (VeoVa) copolymers, and polyurethane polymers.

According to one or more preferred embodiments, the at least one synthetic organic polymer **SP** comprises at least one ethylene-vinyl acetate copolymer and/or at least one terpolymer of ethylene, vinyl acetate, and vinyl ester monomers.

Especially suitable ethylene-vinyl acetate copolymers for use as the at least one synthetic organic polymer **SP** have a content of a structural unit derived from vinyl acetate of not more than 40 w%, preferably not more than 30 w%, more preferably not more than 20 w%, still more preferably not more than 15 w%, based on the weight of the copolymer.

According to embodiments, the at least one synthetic organic polymer **SP** is present in the form of an aqueous polymer dispersion and/or in the form of a re-dispersible polymer powder. The synthetic organic polymer **SP** can be intermixed with the inorganic binder **B** by using any conventional mixing technique. The synthetic organic polymer may also be added together with an aqueous foam to a cement slurry, however, this is less preferred. An aqueous polymer dispersion of at least one synthetic organic polymer **SP** can be prepared, for example, by free-radical polymerization using substance, solution, suspension or emulsion polymerization techniques, which are all known to the person skilled in the art, or by mixing a redispersible polymer powder(s) with water. Aqueous polymer dispersions comprising two or more different synthetic organic polymers **SP** can be easily prepared by using mixtures of commercially available aqueous polymer dispersions and/or redispersible polymers.

The synthetic organic polymer **SP** may be additionally stabilized. Preferably the synthetic organic polymer **SP** is stabilized with polyvinyl alcohol (PVA).

According to one or more embodiments, the hardened inorganic foam further comprises at least one surfactant **S.** The term "surfactant" refers here to surface tension lowering substances, which are usually organic compounds containing both hydrophobic and hydrophilic groups.

Surfactants may be used to stabilize the foam structure during preparation of the hardened inorganic foam. The surfactant **S** may also form part of the aqueous foam.

According to one or more embodiments, the proportion of the at least one surfactant **S** is 0.1 - 25 w%, preferably 1 - 15 w%, more preferably 5 - 12 w%, with respect to the total dry weight of the hardened inorganic foam.

Surfactants are well known to the skilled person and are summarized, for example, in "Surfactants and Polymers in aqueous solutions" (Wiley-VCH, K. Holmberg et al, 2nd Edition, 2007). Suitable surfactants include at least non-ionic surfactants, cationic surfactants, anionic surfactants, and amphoteric surfactants. Amphoteric (zwitterionic) surfactants have both cationic and anionic centers attached to the same molecule.

It may be particularly advantageous to use non-ionic surfactants, since they have a low tendency to be absorbed by cement phases. However, it is also possible to use cationic, anionic, or amphoteric (zwitterionic) surfactants.

Suitable surfactants in the context of the present invention include lipids such as cholates, glycocholates, fatty acid salts, glycerides, glycolipids and phospholipids. These may be derived from natural sources or may be synthetically produced. Non-ionic lipids are preferred in certain embodiments.

Suitable anionic surfactants include compounds containing carboxylate, sulfate, phosphate or sulfonate groups, such as alkyl sulfonates, alkyl ether carboxylates, alkyl sulfates, alkyl ether sulfates, fatty alcohol sulfates, alkyl sulfosuccinates, alkylphenol ethoxylates, olefinsulfonates, alkyl phosphates, alkyl ether phosphonates, lauryl ether sulphonates, naphthalene sulphonates, and alkyl benzene sulfonates.

Suitable non-ionic surfactants include, particularly, fatty acid alkoxylates, alkoxylated alcohols, especially fatty acid alcohol alkoxylates and alkoxylates of glycerol and pentaerythritol, alkylphenol alkoxylates, alkoxylated polysaccharides, alkoxylated polycondensates, fatty acid amide alkoxylates, ethanolamides, esters of fatty acids, especially fatty acid esters of methanol, sorbitan, glycerol or pentaerythritol, alkoxylated alkylamines with an alkyl radical consisting of 6-20 carbon atoms, alkyl glycosides, alkyl glucamides, esters of fatty acids and sugars, polysiloxanes, as well as alkoxylated sorbitans, copolymers of ethylene oxide and propylene oxide, hydrophobized starch, hydrophobized cellulose, proteins, or siloxane-based surfactants. Preferred alkoxylates in this context are particularly ethoxylates.

Especially, the use of protein surfactants leads to mixtures which are stable enough without any further additives to cure to hardened inorganic foam with low density.

Suitable cationic surfactants contain particularly ammonium groups or quaternary nitrogen atoms and have at least one long-chain alkyl radical. Examples of suitable cationic surfactants are quaternary ammonium compounds with at least one alkyl group, phosphonium compounds, such as tetraalkylammonium salts, imidazolines, such as N,N-dialkylimidazoline compounds, dimethyldistearylammonium compounds, N-alkylpyridine compounds, ammonium chlorides, and amine N-oxides. For example, a cationic surfactant can be chosen from tetradecyltrimethylammonium bromide (TTAB), Cetyltrimethylammonium bromide (CTAB), and Dodecyltrimethylammonium bromide (DTAB).

According to one or more embodiments, the at least one surfactant S comprises or consist of at least one Gemini surfactant. Gemini surfactants contain two hydrophilic head groups and two hydrophobic tails separated by a spacer at or near the head groups. When both hydrophobic tails are the same and the hydrophilic groups are identical, Gemini surfactants are said to have a symmetrical structure. The substituents in Gemini surfactants are largely responsible for the behavior of these compounds in solution and their potential applications. Particularly, Gemini surfactants may contain quaternary nitrogen atoms, which are usually present in acyclic forms. However, there are also Gemini surfactants that contain nitrogen in saturated and unsaturated rings. The spacer can be either rigid or flexible, tending to be hydrophobic or hydrophilic. The special properties of Gemini surfactants can be influenced by optimizing the hydrophilic-lipophilic balance (HLB value). This can be done, for example, by introducing balanced polar or hydrophobic groups in both head groups, tails or spacers. Examples of preferred Gemini surfactants are particularly alkoxylated acetyldiols or Gemini surfactants as described in EP 0 884 298.

According to one or more further embodiments, the at least one surfactant S comprises an anionic surfactant and/or a non-ionic surfactant, preferably a mixture of an anionic surfactant and/or a non-ionic surfactant.

According to one or more further embodiments, the at least one surfactant S is an amphoteric surfactant, preferably selected from aminocarboxylic acids and betaines, especially fatty acid amido alkyl betaines, particularly cocamidopropyl betaine. Betaines are neutral chemical compound with a positively charged cationic functional group, such as quaternary ammonium or phosphonium cation, that bears no hydrogen atom, and with a negatively charged functional group such as a carboxylate group that may not be adjacent to the cationic site. A betaine is thus a specific type of a zwitterion. These kinds of surfactants turned out to be highly beneficial in the context of the present invention since they are highly compatible with the further constituents that are typically present in the foamed inorganic material.

According to embodiments, particles N are present in a composition of the present invention.

Particles N of the present invention preferably have a particle size of 10 nm - 500 µm, preferably 20 nm - 300 µm, more preferably 25 nm - 150 µm, still more preferably 30 nm - 100 µm, especially 30 nm - 1 µm. The particle size can be determined by laser diffraction as described in ISO 13320:2009. In particular, a Mastersizer 2000 instrument with a Hydro 2000G dispersion unit and the Mastersizer 2000 software from Malvern Instruments GmbH (Germany) is used. Isopropanol, for example, is suitable as the measuring medium. Preferably, a particle size of nonspherical or irregular particles is represented by the equivalent spherical diameter of a sphere of equivalent volume. Throughout this invention, whenever a range of particle sizes is given, the lower values of the ranges represent D10 values whereas the upper values of the ranges given for the particle size herein represent D90 values of the respective particle size distribution.

According to some embodiments, the particles **N** of the present invention are nanoparticles. This means that the particles **N** have a particle size, especially a particle size D50, in the nanometer range.

In particular, the particles **N** are chosen from inorganic particles, especially from pure and mixed metal oxides, hydroxides, carbides, nitrides, phosphates, carbonates, silicates, sulfates. According to embodiments, the particles **N** are chosen from particles of clay, talc, silica, calcium carbonate, ferrite, gibbsite, titanium oxide, zinc oxide, aluminium oxide, magnesium oxide, zirconium oxide, tin oxide, cerium oxide, spinels, aluminium hydroxide, calcium hydroxide, magnesium hydroxide, silicon carbide, boron carbide, silicon nitride, boron nitride, calcium phosphates, nickel carbonate, calcium carbonate, magnesium carbonate, silica fume, fly ash, quartz, ground glasses, slag, calcium silicates, mullite, cordierite, zeolites, diatomaceous earth, cement, calcium sulfate and/or carbon black particles. Especially, the particles are silica particles.

According to another preferred implementation, the particles are chosen from organic particles, especially polymer particles, in particular polystyrene particles and/or poly(methyl methacrylate) particles.

A proportion of the particles **N,** if present, in particular is from 1 - 50 vol%, in particular 2 - 20 vol%, especially 3 - 10 vol%, with respect to the total volume of the hardened inorganic foam.

An aqueous foam within the present context is a material comprising a gas phase dispersed in water. The gas can be any gas such as air, nitrogen, carbon dioxide, a noble gas, or mixtures thereof, preferably air. The aqueous foam may additionally comprise further ingredients, especially at least one surfactant **S** as described above. Methods of generating aqueous foams are known to the skilled person per se. It is, for example, possible to use a foaming equipment from the company Gertec.

The aqueous foam is preferably prepared by mechanical foaming of an aqueous mixture in the presence of a gas, particularly air, nitrogen and/or carbon dioxide and/or a noble gas. Mechanical foaming refers to a method in which the gaseous bubbles are introduced into the water of the aqueous foam by mixing the gas with water without performing any gas producing chemical reactions.

According to one or more embodiments, the aqueous foam is obtained by mechanical foaming an aqueous mixture with gas, preferably with air.

According to embodiments, the hardened inorganic foam of the present invention is obtained in a method comprising the steps of:
a) providing a wet mixture comprising
   (i) at least one inorganic binder **B,**
   (ii) optionally 1 - 25 w%, preferably 5 - 15 w%, more preferably 8 - 12 w%, relative to the dry weight of the inorganic binder **B,** of at least one synthetic organic polymer **SP,**
   (iii) optionally 0.01 - 10 w%, relative to the dry weight of the inorganic binder **B,** of a superplasticizer for said the inorganic binder **B,** and
   (iv) water in an amount to form a weight ratio of water to inorganic binder **B** of between 0.2 - 0.6;
b) providing an aqueous foam comprising
   (i) water, and
   (ii) 0.1 - 25 w%, preferably 1 - 15 w%, more preferably 1 - 10 w%, relative to the total weight of the aqueous foam, of a surfactant **S** and/or particles **N,**
c) intermixing the wet mixture and the aqueous foam of steps a) and b), and
d) hardening the mixture obtained in step c).

According to embodiments, the hardened inorganic foam of the present invention is obtained in a method comprising the steps of:
a) providing a wet mixture comprising
   (i) at least one inorganic binder **B,**
   (ii) optionally 1 - 25 w%, preferably 5 - 15 w%, more preferably 8 - 12 w%, relative to the dry weight of the inorganic binder **B,** of at least one synthetic organic polymer **SP,**
   (iii) optionally 0.01 - 10 w%, relative to the dry weight of the inorganic binder **B,** of a superplasticizer for said the inorganic binder **B,** and
   (iv) water in an amount to form a weight ratio of water to inorganic binder **B** of between 0.2 - 0.6;
b) providing an aqueous foam comprising
   (i) water, and
   (ii) 1 - 50 vol%, in particular 2 - 20 vol%, especially 3 - 10 vol%, relative to the total volume of the aqueous foam, of particles **N,**
c) intermixing the wet mixture and the aqueous foam of steps a) and b), and
d) hardening the mixture obtained in step c).

The weight ratio of a) and b) in such embodiments depends on the required density.

A lower density is achieved by a higher dosage of b). According to embodiments, the weight ratio of a) and b) is between 10:1 and 1:10.

According to further embodiments, the hardened inorganic foam of the present invention is obtained in a method consisting of the steps:
a) providing a wet mixture comprising
   (i) at least one cement,
   (ii) appr. 10 w%, relative to the dry weight of cement, of at least one synthetic organic polymer **SP,**
   (iii) appr. 0.2 w%, relative to the dry weight of cement, of a superplasticizer for said cement, and
   (iv) water in an amount to form a weight ratio of water cement of 0.4
b) providing an aqueous foam comprising
   (i) water, and
   (ii) appr. 3 w%, relative to the total weight of the aqueous foam, of a surfactant **S,**
c) intermixing the wet mixture and the aqueous foam of steps a) and b), and
d) hardening the mixture obtained in step c).

According to embodiments, the weight ratio of a) and b) is between 10:1 and 1:10.

According to further embodiments, the hardened inorganic foam of the present invention is obtained in a method comprising the steps of:
a) providing a suspension comprising
   (i) at least one inorganic binder **B,**
   (ii) at least one surfactant **S** and/or particles **N,**
   (iii) optionally 1 - 25 w%, preferably 5 - 15 w%, more preferably 8 - 12 w%, relative to the dry weight of the inorganic binder **B,** of at least one synthetic organic polymer **SP,**
   (iv) optionally further additives, and
   (v) water in an amount to form a weight ratio of water to inorganic binder **B** between 0.2 - 0.6,
b) foaming the suspension provided in step a), and
c) hardening the foamed mixture obtained in step b).

Foaming can be by any process known to the skilled person. Especially, foaming can be done by processes of chemical foaming, mechanical foaming, and/or physical foaming.

The hardened inorganic foam of the present invention may additionally comprise further additions common to the concrete or mortar industry. Especially, the inorganic foam of the present invention may comprise aggregates, fillers, superplasticizers, shrinkage reducers, air entrainers, de-aerating agents, rheology modifiers, accelerators, retarders, water resisting agents, strength enhancing additives, fibers, defoamers, redispersible polymer powders, chromate reducers, pigments, corrosion inhibitors, alkali-aggregate reaction inhibitors, anti-freeze agents, hydrophobizing agents, and/or biocides.

Hardening of the inorganic foam typically takes place when contacting the inorganic binder **B** with water and/or leaving the inorganic binder to react between 5 - 50 °C and a pressure of 1 atm. Hardening at higher temperatures and/or at higher pressure is not preferred within the present context. A hardened inorganic foam is obtained, when the mechanical strength, especially the impact resistance, the flexural strength, and/or the compressive strength, does not significantly increase anymore with time. Typically, a hardened inorganic foam is obtained after hardening for 28 days at 20 °C and 1 atm pressure. It can be beneficial to cover the inorganic foam or panels during hardening. Covering prevents the fast evaporation of water and can lead to a higher compressive strength. It is possible to additionally dry a hardened inorganic foam or a panel of the present invention at elevated temperatures, for example at 40 - 90 °C.

Flexural strength can be measured according to DIN EN 1015-11 and compressive strength can be measured according to DIN EN 826:2013. Impact resistance can be measured in accordance to standards EN ISO 7892 and/or EOTA EAD 040083-00-0404 (2019).

Methods to obtain a hardened inorganic foam of the present invention are known to the skilled person and are for example described in WO 2019/038105.

According to embodiments, a method for the production of a hardened inorganic foam comprises the steps of
(i) providing a dry mixture **Md1** comprising the at least one inorganic binder **B** and optionally further additions as described above,
(ii) optionally intermixing the dry mixture **Md1** with at least one synthetic organic polymer **SP,**
(iii) intermixing the mixture obtained under (ii) with an aqueous foam, wherein the aqueous foam comprises the at least one surfactant **S,** to obtain a wet mixture **Mw1,**
(iv) optionally bringing the wet mixture **Mw1** in any desired form and shape,
(v) hardening the wet mixture **Mw1** at 5 - 50 °C and a pressure of 1 atm.

The aqueous foam and the mixture of **Md1** and optionally **SP** are preferably mixed with each other under overpressure conditions. Preferably, at an overpressure of 1 - 15 bar, especially 2 - 5 bar, with respect to the environmental air pressure. This allows for easily adjusting the density of the hardened inorganic foam in wide ranges.

Most preferably, the mixing is conducted using a static mixer, whereby, preferably, the aqueous foam and the mixture of **Md1** and optionally **SP** are driven by pressurized air through the static mixer. Preferably, the pressurized air has a pressure of 1 - 15 bar, especially 6 - 10 bar, above the environmental air pressure. Thereby, a stable foam is obtainable in a reliable manner. The aqueous foam may be mixed with the slurry either batch-wise or continuously.

The weight ratio of water to the at least one inorganic binder **B** in the wet mixture **Mw1** is preferably 0.2 - 0.7, more preferably 0.25 - 0.5, even more preferably 0.3 - 0.4.

According to alternative embodiments, a method for the production of a hardened inorganic foam comprises the steps of
(i) providing a dry mixture **Md1** comprising the at least one inorganic binder B and optionally further additions as described above,
(ii) optionally intermixing the dry mixture **Md1** of step (i) with at least one synthetic organic polymer **SP** and with water to prepare a wet mixture **Mw,**
(iii) intermixing the mixture obtained under (ii) with an aqueous foam, wherein the aqueous foam comprises the at least one surfactant **S,** to obtain a wet mixture **Mw1,**
(iv) optionally bringing the wet mixture **Mw1** in any desired form and shape,
(v) hardening the wet mixture **Mw1** at 5 - 50 °C and a pressure of 1 atm.

The aqueous foam and the wet mixture **Mw** are preferably mixed with each other under overpressure conditions. Preferably, at an overpressure of 1 - 15 bar, especially 2 - 5 bar, with respect to the environmental air pressure. This allows for easily adjusting the density of the hardened inorganic foam in wide ranges.

Most preferably, the mixing is conducted using a static mixer, whereby, preferably, the aqueous foam and the wet mixture **Mw** are driven by pressurized air through the static mixer. Preferably, the pressurized air has a pressure of 1 - 15 bar, especially 2 - 5 bar, above the environmental air pressure. Thereby, a stable foam is obtainable in a reliable manner. The aqueous foam may be mixed with the slurry either batch-wise or continuously.

The weight ratio of water to the at least one inorganic binder **B** in the wet mixture **Mw** is preferably 0.2 - 0.7, more preferably 0.25 - 0.5, even more preferably 0.3 - 0.4.

According to alternative embodiments, a method for the production of a hardened inorganic foam comprises the steps of
(i) providing a dry mixture **Md1** comprising the at least one inorganic binder **B** and optionally further additions as described above,
(ii) intermixing at least one surfactant **S,** water, and optionally at least one synthetic organic polymer **SP** with the dry mixture **Md1** to prepare a wet mixture **Mw1,**
(iii) foaming the wet mixture **Mw1** obtained under (ii),
(iv) optionally bringing the foamed wet mixture **Mw1** in any desired form and shape,
(v) hardening the foamed wet mixture **Mw1** at 5 - 50 °C and a pressure of 1 atm.

The weight ratio of water to the at least one inorganic binder **B** in the wet mixture **Mw1** is preferably 0.2 - 0.7, more preferably 0.25 - 0.5, even more preferably 0.3 - 0.4.

Thus, the hardened inorganic foam of the present invention is obtained by providing a dry mix **Md1** comprising the at least one inorganic binder **B** and optionally further additions as described above, preparing a wet mix **Mw1** from said dry mix **Md1** by adding an aqueous foam, wherein the aqueous foam comprises the at least one surfactant **S,** and optionally at least one synthetic organic polymer **SP,** and hardening said wet mix **Mw1.**

According to embodiments, the hardened inorganic foam has a density of not more than 500 g/l, preferably not more than 350 g/l, more preferably not more than 250 g/l, even more preferably not more than 200 g/l, such as 25 - 250 g/l, preferably 35 - 150 g/l.

According to embodiments, the hardened inorganic foam has a thermal conductivity of between 0.02 and 0.15 W/m•K, preferably 0.03 and 0.07 W/m•K. The thermal conductivity is measured as described in standard DIN EN 12664:2001.

The panel according to the present invention comprises at least one structural reinforcing element which is firmly attached to at least one surface of the hardened inorganic foam, and which is a hardened mortar, preferably a hardened cementitious mortar.

Especially, the at least one structural reinforcing element forms an outer face of a panel of the present invention.

Firmly attached means that the structural reinforcing element cannot be easily removed from the surface of the hardened inorganic foam, preferably the structural reinforcing element cannot be removed from the surface without damaging the hardened inorganic foam. In other words, preferably, the pull-off strength of the at least one structural reinforcing element from said surface is higher than the tensile strength of the hardened inorganic foam.

Very preferably, the at least one structural reinforcing element fully covers at least one surface of the hardened inorganic foam without any overlap. Panels with such built-up can be conveniently used to cover a surface, for example the exterior of a building, by placing them next to each other. It is, however, also possible that the at least one structural reinforcing element covers only a part of one surface of the hardened inorganic foam. For example, a structural reinforcing element may cover one half of one surface of the insulation layer while the other half of the surface of the insulation layer is covered with an adjacent structural reinforcing element. According to some embodiments, one part, for example one half, of a structural reinforcing element covers one part, for example one half, of the surface of an insulation layer, while another part, for example the other half, of the same structural reinforcing element covers one part, for example one half, of another, adjacent insulation layer. By repeating such built-up, a surface, for example the exterior of a building, can be covered.

Especially preferably, two or more surfaces, in particular two surfaces, of the hardened inorganic foam are fully covered by structural reinforcing elements. Thus, according to embodiments, a panel according to the present invention is characterized in that a first structural reinforcing element is firmly attached to a first surface of the insulation layer and a second reinforcing element is firmly attached to a second surface of the insulation layer. The first and the second structural reinforcing elements may have the same chemical composition and density or may differ in chemical composition and/or density. Especially preferably, said first surface and said second surface of the insulation layer are opposing surfaces of the insulation layer.

According to especially preferred embodiments, a panel of the present invention comprises or consists of a first structural reinforcing element forming a first outer face of the panel, an insulation layer formed by a hardened inorganic foam, and a second structural reinforcing element forming a second external face of the panel, the first and second structural reinforcing elements being arranged on opposing surfaces of the insulation layer.

The structural reinforcing element is a hardened mortar, preferably a hardened cementitious mortar. In particular hardened mortars of the present invention have almost the same chemical composition or have essentially the same chemical composition as the hardened inorganic foam but have a higher density. The term "almost the same" as well as "almost identical" in this respect means that 80% of the weight, preferably 90% of the weight of the composition are chemically the same. Thus, according to embodiments, the insulation layer formed by a hardened inorganic foam and each structural reinforcing element are almost identical in chemical composition or have essentially the same chemical composition and each structural reinforcing element has a higher density as compared to the insulation layer.

Depending on the density of the hardened inorganic foam, the density of the hardened mortar may be not less than 200 g/l, preferably not less than 250 g/l, more preferably not less than 500 g/l, even more preferably not less than 1000 g/l, especially not less than 1500 g/l or not less than 2000 g/l.

According to embodiments, the density of the structural reinforcing element which is a hardened mortar is at least 1.5 times higher, preferably at least 2 times higher, especially at least 5 times higher, as compared to the density of the hardened inorganic foam.

A preferred hardened mortar of the present invention is obtained from (in each case relative to the total dry weight of the composition):
a) 10 - 90 w%, preferably 15 - 65 w%, more preferably 30 - 55 w% of at least one inorganic binder **B,**
b) 0 - 80 w%, preferably 25 - 75 w%, more preferably 35 - 60 w%, of aggregates, especially of sand,
c) 0.01 - 10 w% of other additives, and
d) water.

The amount of water used is sufficient to harden the at least one inorganic binder **B** and to provide a desired workability to the dry mix of the mortar, especially cementitious mortar. Preferably, the amount of water is such that a weight ratio of water to powder of between 0.3 - 1.0, more preferably 0.5 - 0.8 results.

The at least one inorganic binder **B** is as defined above.

Other additives are selected from the groups of plasticizers, superplasticizers, rheology modifiers, accelerators, retarders, air-entrainers, de-aerating agents, corrosion inhibitors, fibers, redispersible polymer powders, shrinkage reducers, pigments, strength enhancing additives, water resisting agents, alkali-aggregate reaction inhibitors, chromate reducers, defoamers, steel-passivating agents, anti-freeze agents, and/or biocides.

Aggregates can be any material that is non-reactive in the hydration reaction of binders. Aggregates can be any aggregate typically used for construction materials. Typical aggregates are for example rock, crushed stone, gravel, sand, especially quartz sand, river sand and/or manufactured sand, recycled concrete, glass, expanded glass, hollow glass beads, glass ceramics, volcanic rock, pumice, perlite, vermiculite, quarry wastes, raw, fired or fused earth or clay, porcelain, electrofused or sintered abrasives, firing support, silica xerogels. Aggregates may also be fine aggregates or fillers such as ground limestone, ground dolomite, and/or ground aluminum oxide. Aggregates useful for the present invention can have any shape and size typically encountered for such aggregates. An especially preferred aggregate is sand. Sand is a naturally occurring granular material composed of finely divided rock or mineral particles. It is available in various forms and sizes. Examples of suitable sands are quartz sand, limestone sand, river sand or crushed aggregates. Suitable sands are for example described in standards ASTM C778 or EN 196-1.

According to embodiments, aggregates can also be one or more of the following (i) - (v):
(i) biosourced materials, preferably of plant origin, more preferably biosourced materials of plant origin essentially composed of cellulose and/or lignin, especially biosourced materials selected from the group comprising or consisting of hemp, flax, cereal straw, oats, rice, rape, maize, sorghum, flax, miscanthus, rice husk, sugar cane, sunflower, kenaf, coconut, olive stones, bamboo, wood, or mixtures thereof. According to embodiments, biosourced materials of plant origin have a defined form which is preferably selected from fibres, fibrils, dust, powders, shavings, pith, in particular pith of sunflower, maize, rape, and mixtures thereof.
(ii) synthetic non-mineral materials, preferably selected from the group comprising or consisting of thermoplastic, thermosetting plastics, elastomers, rubbers, textiles fibers, plastic materials reinforced with glass or carbon fibres. Synthetic non-mineral materials can be filled or unfilled.
(iii) aggregates of inorganic nature from the deconstruction of civil engineering or building structures, preferably selected from the group comprising or consisting of waste concrete, mortar, bricks, natural stone, asphalt, tiles, tiling, aerated concrete, clinker, scrap metal.
(iv) aggregates of organic nature from the recycling of industrial products, in particular composite materials which are difficult to recycle, especially recycled insulating materials. Especially preferred examples are polystyrenes, polyurethanes, phenolic resins, wood insulating materials, and mixtures thereof.
(v) non-hazardous granular materials usually destined for landfill such as used foundry sands, catalyst supports, Bayer process de-soding treatment supports, clinker aggregates, fillers from the treatment of excavation sludge, sewage sludge, slurry, paper waste, paper incineration ashes, household waste incineration ashes.

Most preferably, aggregates are in particulate form.

It is important within the present context that the hardened mortar, especially the hardened cementitious mortar, forming the structural reinforcing layer has a mechanical strength high enough to resist exterior loads. For example, the impact resistance classification of said mortar should be category I or II according to EOTA EAD 040083-00-0404 (2019). For example, the compressive strength of said mortar should be not lower than 70 kPa, preferably not lower than 100 kPa, more preferably not lower than 300 kPa.

Flexural strength can be measured according to DIN EN 1015-11 and compressive strength can be measured according to DIN EN 826:2013. Impact resistance can be measured in accordance to standards EN ISO 7892 and/or EOTA EAD 040083-00-0404 (2019).

Thus, according to embodiments, a panel of the present invention is characterized in that the reinforcing element is a hardened cementitious mortar obtained from (in each case relative to the total dry weight of the composition):
a) 10 - 90 w%, preferably 15 - 65 w%, more preferably 30 - 55 w% of at least one inorganic binder **B,**
b) 0 - 80 w%, preferably 25 - 75 w%, more preferably 35 - 60 w%, of aggregates, especially of sand,
c) 0.01 - 10 w% of other additives, and
d) water,
and having an impact resistance classification of category I or II according to EOTA EAD 040083-00-0404 (2019). In the alternative the mortar has a compressive strength of not lower than 70 kPa, preferably not lower than 100 kPa, more preferably not lower than 300 kPa.

According to particularly preferred embodiments of the present invention, the reinforcing element is a hardened cementitious mortar having the same chemical composition as the hardened inorganic foam forming the insulation layer, wherein said hardened cementitious mortar has a higher density as compared to said hardened inorganic foam. For example, the density of the hardened inorganic foam forming the insulation layer is not more than 500 g/l, preferably not more than 350 g/l, more preferably not more than 250 g/l, even more preferably not more than 200 g/l, such as 25 - 250 g/l, preferably 35 - 150 g/l, and the density of the structural reinforcing element which is a hardened mortar is at least 1.5 times higher, preferably at least 2 times higher, especially at least 5 times higher, as compared to the density of the hardened inorganic foam.

Different density of the hardened cementitious mortar forming the reinforcing layer and the hardened inorganic foam forming the insulation layer can be achieved, for example, by mixing in different weight ratios of a) to b):
a) an aqueous slurry comprising at least one inorganic binder **B,** optionally at least one synthetic organic polymer **SP,** and water, with
b) an aqueous foam comprising water and a surfactant **S** and/or particles **N.**

A higher weight ratio a) to b) will lead to a higher density, whereas a lower weight ratio will lead to lower density.

These embodiments offer the advantage of especially simple production processes and better recyclability.

The hardened cementitious mortar of the present invention is obtained by providing a dry mix **Md2** mix comprising the at least one inorganic binder **B,** other additives, and optionally aggregates as described above, preparing a wet mix **Mw2** from said dry mix **Md2** by adding water, and hardening said wet mix **Mw2.**

According to some particularly useful embodiments, the composition of the dry mix **Md1** and the dry mix **Md2** as described above have the same composition.

According to embodiments, the mortar, preferably cementitious mortar, used as structural reinforcing element of the present invention is in the form of a flat layer or flat sheet. Also, the insulation layer can be in the form of a flat layer of flat sheet. In some embodiments, the mortar, preferably cementitious mortar, used as structural reinforcing element of the present invention is in the form of a flat layer or flat sheet and covers one surface of the insulation layer, preferably a flat sheet of insulation layer, and has the same dimensions as said surface of the insulation layer. In other embodiments, the mortar, preferably cementitious mortar used as structural reinforcing element covers two or more surfaces of the insulation layer, preferably two surfaces. The mortar, preferably cementitious mortar, can be in the form of several flat layers or flat sheets, each sheet applied to a different surface of the insulation layer, wherein each sheet has dimensions equal to the surface to be covered. Also, in such embodiments, the insulation layer can be in the form of a flat sheet. According to certain embodiments, a panel of the present invention is characterized in that a first flat layer or flat sheet of mortar, especially cementitious mortar, is firmly attached to one surface of the insulation layer, preferably a flat sheet of insulation layer, and completely covers said surface of the insulation layer. Optionally in such embodiments, a second flat sheet of mortar especially cementitious mortar, is firmly attached to a second surface of the insulation layer, especially flat sheet of insulation layer, and completely covers said second surface of the insulation layer. Preferably, the first and second surface thus covered are opposing sides of the insulation layer. Further preferably, the insulation layer is in the form of a flat sheet. Very preferably in such embodiments, the width and length of the layer or sheet of mortar, especially cementitious mortar, and of the insulation layer are equal.

A panel of the present invention comprising an insulation layer formed by a hardened inorganic foam and at least one structural reinforcing element which is a cementitious mortar has particularly good fire-resistant properties. A panel of the present invention comprising an insulation layer formed by a hardened inorganic foam and at least one structural reinforcing element which is a cementitious mortar especially has an excellent balance of insulation properties, especially thermal and/or acoustic insulation properties, fire resistant properties, and strength, especially compressive and/or flexural strength.

A panel of the present invention may have any form or shape as is outlined above. According to embodiments, a panel of the present invention is in the form of a rectangular sheet having a total thickness of between 0.2 - 50 cm, preferably 0.5 - 25 cm, more preferably 5 - 25 cm. The total thickness of a panel of the present invention relates to the combined thickness of the insulation layer formed by a hardened inorganic foam plus the thickness of any, at least one, structural reinforcing elements. Especially, the thickness of the insulation layer formed by a hardened inorganic foam can be adjusted to provide desired insulation properties, especially thermal and/or acoustic insulation and/or fire protection properties, and the thickness of the at least one, structural reinforcing element can be adjusted to provide desired strength, especially compressive and/or flexural strength. It can be preferred that the thickness of the insulation layer formed by a hardened inorganic foam and of the at least one reinforcing element are different.

According to embodiments, a panel of the present invention comprises of consists of (i) an insulation layer formed by hardened inorganic foam with a density in the range of 50 - 200 g/l, said layer having a thickness of 5 - 20 cm, and
b) and at least one structural reinforcing element which is firmly attached to at least one surface of said hardened inorganic foam and having a thickness of between 2 - 5 cm, said structural reinforcing element being formed by a hardened cementitious mortar with the density which is at least 1.5 times higher, preferably at least 2 times higher, preferably at least 5 times higher, as compared to the density of the hardened inorganic foam.

All embodiments described as above also relate to these embodiments.

According to a second aspect, the present invention relates to a method of making a panel according to the present invention.

According to embodiments, said method comprises the steps of
(i) providing an inorganic foam,
(ii) providing a cementitious mortar,
(iii) bringing in close contact said inorganic foam and said cementitious mortar while still in an uncured state, and
(iii) hardening the assembly of inorganic foam and cementitious mortar.

It is possible, in step iii), that a layer of mortar, preferably cementitious mortar, is applied onto at least one surface of inorganic foam, while, preferably, said inorganic foam is still wet. It is additionally possible to apply additional primers or adhesive materials onto the inorganic foam before application of the layer of cementitious mortar.

It is likewise possible, in step iii), that the inorganic foam is applied onto at least one layer of cementitious mortar while, preferably, said cementitious mortar is still wet. It is additionally possible to apply additional primers or adhesive materials onto the cementitious mortar before application of the layer of inorganic foam.

According to embodiments, a method of the present invention additionally comprises the steps of
a) optionally filling a cementitious mortar in the wet state into a mould,
b) placing the inorganic foam into a mould, which is the same as used in a) if present, and
c) applying a cementitious mortar on top of the inorganic foam in the same mould.

According to other embodiments, a method of the present invention additionally comprises the steps of
a) optionally extruding a layer of a cementitious mortar in the wet state,
b) extruding a layer of the inorganic foam or, if step a) is present, extruding a layer of the inorganic foam on top of the cementitious mortar in the wet state, and
c) extruding a layer of a cementitious mortar on top of the inorganic foam.

A method of the present invention can be a method of co-extrusion. Thus, the layer of mortar, preferably cementitious mortar, may be co-extruded together with the inorganic foam. Alternatively, the inorganic foam may also be extruded onto a mortar surface. Another mode is layered deposition of an inorganic foam and of a mortar, preferably cementitious mortar.

However, especially where the densities of the inorganic foam and of the cementitious mortar in the wet state differ to a large extent, for example, where the density of the cementitious mortar in the wet state is 2 times higher or is 5 times higher than the density of the inorganic foam in the wet state, the application of cementitious mortar on top of inorganic foam may lead to a sinking of the cementitious mortar into the inorganic foam and/or the collapse of the foam layer. In such cases, it may therefore be preferably to harden the inorganic foam at least to some extent before applying a cementitious mortar on top. The term "hardening at least to some extent" refers to a time of hardening sufficient for the inorganic foam to develop enough mechanical strength to bear the weight of the cementitious mortar.

According to some embodiments, the cementitious mortar is applied to the inorganic foam only after the inorganic foam has hardened at least to some extent.

Thus, according to embodiments, a method of producing a panel of the present invention comprises the steps of
(i) providing an inorganic foam,
(ii) providing a cementitious mortar,
(iii) bringing in close contact said inorganic foam and said cementitious mortar when the inorganic foam has hardened at least to some extent and the cementitious mortar is still wet, and
(iii) hardening the assembly of inorganic foam and cementitious mortar.

According to some other embodiments, the inorganic foam is applied to the cementitious mortar only after the cementitious mortar has hardened at least to some extent.

Thus, according to embodiments, a method of producing a panel of the present invention comprises the steps of
(i) providing an inorganic foam,
(ii) providing a cementitious mortar,
(iii) bringing in close contact said inorganic foam and said cementitious mortar when the cementitious mortar has hardened at least to some extent and the inorganic foam is still wet, and
(iii) hardening the assembly of inorganic foam and cementitious mortar.

The mortar, preferably cementitious mortar, the inorganic foam, and the insulation layer are as described above. Thus, all embodiments and preferred features as described above also apply to this aspect of the present invention.

Very preferably, hardening is done at 5 - 50 °C and a pressure of 1 atm. Hardening at higher temperatures and/or under pressure, e.g. in an autoclave, is not preferred.

In particular, according to embodiments, in a method of the present invention the inorganic foam and the cementitious mortar are identical in chemical composition and the cementitious mortar has a higher density as compared to the inorganic foam.

It is a special advantage that such panels can be easily recycled.

It is possible for a method of making a panel of the present invention to be performed on a given jobsite. Thus, a panel of the present invention may be made on a jobsite, for example on a construction site or on a site where a system using such panel is made. It is likewise possible for a method of making a panel of the present invention to be performed offsite. Thus, a panel of the present invention may also be prefabricated and transported to a job site for installation or to a site where the panel is subsequently used for making further systems.

In a further aspect the present invention relates to the use of a panel as described above or obtained by a method as described above as a thermal and/or acoustic insulation, and/or fire protection panel or as part of a thermal insulation system, or as part of an acoustic insulation system, or as part of a fire protection system.

According to embodiments, the panel has a thermal conductivity of between 0.02 and 0.15 W/m•K, preferably 0.03 and 0.07 W/m•K measured as described in standard DIN EN 12664:2001, a density of not more than 500 g/l, preferably not more than 350 g/l, more preferably not more than 250 g/l, even more preferably not more than 200 g/l, such as 25 - 250 g/l, preferably 35 - 150 g/l measured as described above, and an impact resistance for classification of category I or II according to EOTA EAD 040083-00-0404 (2019). In the alternative the mortar has a compressive strength of not lower than 70 kPa, preferably not lower than 100 kPa, more preferably not lower than 300 kPa measured according to DIN EN 826:2013.

According to embodiments, a thermal and/or acoustic insulation panel of the present invention has fire resistant properties or can be used as fire barrier. Fire resistant properties within the present context exist when requirements of at least one of the following standards are fulfilled: UL 790, UL 1256, FM Approvals 4880, FM Approvals 4882, ASTM E84, ASTM E108, EN 13501-1. Very preferably, panels of the present invention comply with class A1 or A2 according to standard EN 13501 :2019-05.

In a further aspect the present invention relates to the use of a panel as described above or obtained by a method as described above as a cover board and/or as a passive fire barrier.

Especially, cover boards within the present sense can be used for roofing applications. Cover boards can be applied underneath roof membranes to provide a fire barrier, to add additional thermal and/or acoustic insulation properties, and/or to support and reduce stress of the roof membrane.

According to embodiments, the panel has a thermal conductivity of between 0.02 and 0.15 W/m•K, preferably 0.03 and 0.07 W/m•K measured as described in standard DIN EN 12664:2001, a density of not more than 500 g/l, preferably not more than 350 g/l, more preferably not more than 250 g/l, even more preferably not more than 200 g/l, such as 25 - 250 g/l, preferably 35 - 150 g/l measured as described above, and an impact resistance for classification of category I or II according to EOTA EAD 040083-00-0404 (2019). In the alternative the mortar has a compressive strength of not lower than 70 kPa, preferably not lower than 100 kPa, more preferably not lower than 300 kPa measured according to DIN EN 826:2013.

According to embodiments, a cover board of the present invention has fire resistant properties or can be used as a passive fire barrier. Fire resistant properties within the present context exist when requirements of at least one of the following standards are fulfilled: UL 790, UL 1256, FM Approvals 4880, FM Approvals 4882, ASTM E84, ASTM E108, EN 13501-1. Very preferably, panels of the present invention comply with class A1 or A2 according to standard EN 13501-1:2019.

### Figures

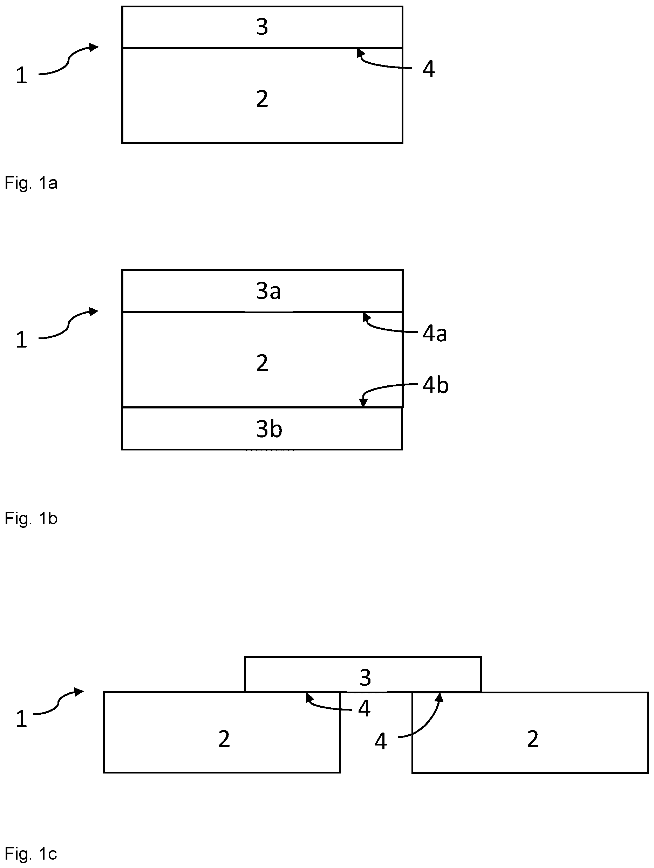

Figure 1a: Shows an insulating panel according to the present invention. In the embodiment shown in figure 1a, the panel (1) comprises an insulation layer (2) formed by a hardened inorganic foam and at least one structural reinforcing element (3) which is firmly attached to one surface (4) of said hardened inorganic foam (2).

Figure 1b: Shows an insulating panel according to the present invention. In the embodiment shown in figure 1b, the panel (1) comprises a first structural reinforcing element (3a) which is firmly attached to a first surface (4a) of the insulation layer (2) and a second reinforcing element (3b) which is firmly attached to a second surface (4b) of the insulation layer (2).

Figure 1c: Shows an insulating panel according to the present invention. In the embodiment shown in figure 1c, the panel (1) comprises two insulation layers (2a, 2b) formed by a hardened inorganic foam and at least one structural reinforcing element (3) which is firmly attached to a first surface (4a) of the first insulation layer (2a) and which is additionally firmly attached to a second surface (4b) of the second insulation layer (2b).

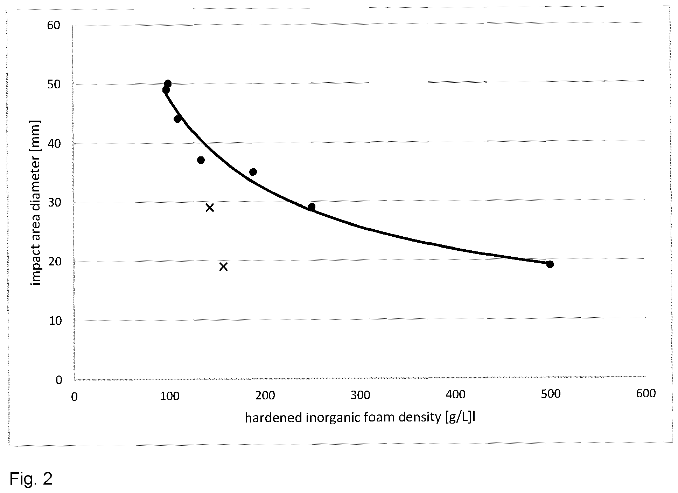

Figure 2: Is a graph showing the dependency of the impact area diameter and the hardened inorganic foam density. In figure 2 the black dots and the black line correspond to the curve of impact resistance vs density of pure foams (the black dots representing the measured values of table 1 in the experimental section, the black line representing the best curve fitting to these results). The two crosses correspond to the impact area diameter of the high density side of panels of type I and II plotted against the overall panel density (results from table 2 of the experimental section).

The numbers in the figures have the following meaning:
- 1 -: panel
- 2 -: insulating layer
- 2a -: first insulating layer
- 2b -: second insulating layer
- 3 -: structural reinforcing element
- 3a -: first structural reinforcing element
- 3b -: second structural reinforcing element
- 4 -: surface
- 4a -: first surface
- 4b -: second surface

### Examples

For producing foamed mineral binder compositions, a device of type "Foamed Concrete Laboratory Mixer - SBL" from GERTEC Maschinen- und Anlagenbau GmbH (Germany) was used. Thereby, an aqueous foam with a predetermined density was produced in a first container, and a cement slurry was produced separately in a second container. Subsequently, the aqueous foam and the cement slurry were driven by pressurized air through a static mixing unit of the device in order to obtain a foamed mineral binder composition, i.e. a foamed cement composition. Thereby, the target foam density of the foamed cement composition was adjusted by the air pressure.

The cement slurry was prepared from 64 w% of Portland cement of type CEM I, 25.6 w% of water, 6.4 w% of a one synthetic organic polymer **SP** (ethylene-vinyl acetate copolymer with Tg 16 °C and stabilized with PVA), 3.8 w% of a polyurethane polymer (used as dispersion in water, the 3.8 w% relate to the polymer content),

The aqueous foam was prepared from 97 w% of water and 3 w% of a mix of anionic and non-ionic surfactants.

The foam production with the Gertec SBL equipment was started and foams were produced by placing a layer with a thickness of 14 cm and with a targeted density between 100 and 200 g/L into a mould. The surface of this layer was levelled off and the respective foam was left at 23 °C / 50 % r.h. After 1 day, the foam was de-moulded and left for curing for a total of 28 days. Details of foams thus produced are reported in below table 1.

Additionally, panels were produced as follows:
A first layer of foam with a thickness of 2 - 4 cm and with a targeted density of 250 and 500 g/L respectively was placed into a mould. This first layer was levelled off and directly afterwards a second layer of foam with a thickness of 10 - 12 cm and a targeted density of 100 g/L was applied on top of said first layer into the mould. The second layer was levelled off and the respective panel was left at 23 °C / 50 % r.h.

After 1 day, the panel was de-moulded and left for curing for a total of 28 days.

Details of panels thus produced are reported in below table 2. Panels of type I had a 1^{st} layer with 4 cm thickness and a density of 250 g/L and a 2^{nd} layer with 10 cm thickness and a density of 100 g/L. Panels of type II had a 1^{st} layer with 2 cm thickness and a density of 500 g/L and a 2^{nd} layer of 12 cm thickness and a density of 100 g/L.

The foams and the panels obtained were tested for impact resistance in a procedure similar to the method described in EN ISO 7892 and EOTA EAD 040083-00-0404 (2019). For the test a steel ball of 74 mm diameter and with a weight of 644 g was dropped on the respective surface of the hardened inorganic foam or the panel as indicated in below tables 1 or 2 from a height of 47.5 cm. The diameter of the impact area is reported in below tables 1 and 2.

**Table 1: hardened inorganic foam impact resistance**

| | 1-1 | 1-2 | 1-3 | 1-4 |
|---|---|---|---|---|
| Density of foam [g/L] | 98 | 110 | 134 | 189 |
| Impact area diameter [mm] | 49 | 44 | 37 | 35 |

**Table 2: panel impact resistance**

| | 2-1 | 2-2 | 2-3 | 2-4 |
|---|---|---|---|---|
| Panel type | 1 | 1 | 2 | 2 |
| Overall density of panel [g/L] | 143 | 143 | 157 | 157 |
| Density of impacted material [g/L] | 250 | 100 | 500 | 100 |
| Impact area diameter [mm] | 29 | 50 | 19 | 50 |

From the results of above table 1 it becomes clear that the impact resistance increases with increasing density of the impacted material. The increase is not linear because an upper limit of impact resistance is reached with increasing density (see black line in figure 2).

Results of above table 2 show that panels according to the present invention have a sufficiently high impact resistance and are thus for example suitable as thermal insulation panels for façade applications with impact resistance category II according to EOTA EAD 040083-00-0404 (2019). Panels of type I with an overall density of 143 g/L have a lower impact area diameter and thus higher impact resistance on the high density side as compared to pure foams of the same overall density. The same is true for panels of type II with an overall density of 157 g/L. This can be seen in figure 2. In figure 2 the black dots and the black line correspond to the curve of impact resistance vs density of pure foams (the black dots representing the measured values of table 1) and the two crosses corresponding to the impact area diameter of the high density side of panels of type I and II plotted against the overall panel density. It can be seen that the black crosses lie significantly below the black line. Thus, the panels of type I and of type II have a higher impact resistance as compared to pure foams of the same overall density and are thus reinforced.

## Claims

1. A panel (1) comprising an insulation layer (2) formed by a hardened inorganic foam and at least one structural reinforcing element (3) which is firmly attached to at least one surface (4) of said hardened inorganic foam (2), wherein said at least one structural reinforcing element (3) is a hardened mortar, preferably a hardened cementitious mortar.

2. A panel (1) according to claim 1, **characterized in that** a first structural reinforcing element (3a) is firmly attached to a first surface (4a) of the insulation layer (2) and a second reinforcing element (3b) is firmly attached to a second surface (4b) of the insulation layer (2).

3. A panel (1) according to claim 2, **characterized in that** the first surface (4a) and the second surface (4b) of the insulation layer (2) are opposing surfaces.

4. A panel (1) according to at least one of the preceding claims, **characterized in that** the hardened inorganic foam comprises
a) at least one cured inorganic binder **B,**
b) at least one surfactant **S** and/or particles **N,** and
c) optionally at least one synthetic organic polymer **SP.**

5. A panel (1) according to at least one of the preceding claims, **characterized in that** the reinforcing element (3) is a hardened cementitious mortar obtained from (in each case relative to the total dry weight of the composition):
a) 10 - 90 w%, preferably 15 - 65 w%, more preferably 30 - 55 w% of at least one inorganic binder **B,**
b) 0 - 80 w%, preferably 25 - 75 w%, more preferably 35 - 60 w%, of aggregates, especially of sand,
c) 0.01 - 10 w% of other additives, and
d) water.

6. A panel (1) according to at least one of claims 1 - 4, **characterized in that** the insulation layer (2) formed by a hardened inorganic foam and each structural reinforcing element (3) are almost identical in chemical composition or have essentially the same chemical composition, and wherein each structural reinforcing element (3) has a higher density as compared to the insulation layer (2).

7. A panel (1) according to at least one of the preceding claims, **characterized in that** the insulation layer (2) has a density of not more than 500 g/l, preferably not more than 350 g/l, more preferably not more than 250 g/l, even more preferably not more than 200 g/l, such as 25 - 250 g/l, preferably 35 - 150 g/l.

8. A panel (1) according to any of the preceding claims, **characterized in that** the insulation layer (2) has a thermal conductivity of between 0.02 and 0.15 W/m•K, preferably 0.03 and 0.07 W/m•K.

9. A method of making a panel (1) according to any of the claims 1 - 8, said method comprising the steps of
(i) providing an inorganic foam,
(ii) providing a cementitious mortar,
(iii) bringing in close contact said inorganic foam and said cementitious mortar while still in an uncured state, and
(iv) hardening the assembly of inorganic foam and cementitious mortar.

10. A method of making a panel (1) according to claim 9, **characterized in that** it additionally comprises the steps of
a) optionally filling a cementitious mortar in the wet state into a mould,
b) placing the inorganic foam into a mould, which is the same as used in a) if present, and
c) applying a cementitious mortar on top of the inorganic foam, preferably in the same mould if present.

11. A method of making a panel (1) according to claim 9, **characterized in that** it additionally comprises the steps of
a) optionally extruding a layer of a cementitious mortar in the wet state,
b) extruding a layer of the inorganic foam or, if step a) is present, extruding a layer of the inorganic foam on top of the cementitious mortar in the wet state, and
c) extruding a layer of a cementitious mortar on top of the inorganic foam.

12. A method of making a panel (1) according to any of claims 9 - 11, **characterized in that** the inorganic foam and the cementitious mortar are identical in chemical composition and wherein the cementitious mortar has a higher density as compared to the inorganic foam.

13. Use of a panel (1) according to any of the claims 1 - 8 or made in a method according to any of claims 9 - 12 as a thermal and/or acoustic insulation panel, and/or fire protection panel, or as part of a thermal insulation system, or as part of an acoustic insulation system, or as part of a fire protection system.

14. Use of a panel (1) according to any of the claims 1 - 8 or made in a method according to any of claims 9 - 12 as a cover board and/or as a passive fire barrier.
